# EUROPEAN PATENT SPECIFICATION

(11) **EP 4 249 815 B1**
(45) Date of publication and mention of the grant of the patent: **20.08.2025**
(21) Application number: 23163997.2
(22) Date of filing: 24.03.2023
(51) Int. Cl.: F24F 1/02, F24F 1/032, F24F 1/0373, F24F 12/00

(54) **AIR-TREATMENT UNIT FOR AIR CONDITIONING A BUILDING ROOM**
LUFTBEHANDLUNGSEINHEIT ZUR KLIMATISIERUNG EINES GEBÄUDERAUMS
UNITÉ DE TRAITEMENT D'AIR POUR CLIMATISER UN ESPACE DE CONSTRUCTION

(30) Priority: 25.03.2022 IT 202200005963
(43) Date of publication of application: 27.09.2023
(73) Proprietor: Helty S.r.l., 36015 Schio (VI) (IT)
(72) Inventor: DALLA VIA, Luciano, 36015 SCHIO (VI) (IT)
(74) Representative: Studio Torta S.p.A.

(56) References cited:
- EP-A1- 3 124 884
- EP-A1- 3 896 349
- KR-A- 20180 069 630
- US-A- 4 048 811
- US-A1- 2008 250 800

## Description

### TECHNICAL FIELD

This invention concerns an air-treatment unit for conditioning a room of a building and, in particular, a wall fan convector.

The conditioning of rooms in a building involves, in many cases, both the exchange of air in the rooms and the treatment of the air by varying the temperature thereof.

### BACKGROUND

Systems are known where both the exchange and the thermal treatment of the air are carried out in a centralised manner and the air is distributed in the rooms of the building with suitable channels.

Systems wherein the thermal treatment of the air is implemented by an air-treatment unit arranged in the individual rooms of the building are also known such as those disclosed in EP3,124,884, US2008/250800 and KR 20180069630.

Devices for controlled mechanical ventilation configured to be installed in respective peripheral walls of the rooms of the building, in order to implement the necessary exchange of the air in each of the rooms, are also known, for example from US 4,048,811.

For example, the document IT 102019000003293 shows a conditioning device for conditioning rooms, on an annual cycle, that is integrated into a thermal insulating monoblock for holes and shutters that also integrates the function of air exchange.

### SUMMARY

The purpose of this invention is to produce an air-treatment unit for conditioning a room of a building that is efficient and practical.

In accordance with this invention, an air-treatment unit for conditioning a room of a building according to claim 1 is produced, the unit being configured to be mounted on a perimeter wall (2) of a building and inside a room of the building and comprising:
- a first module configured to recirculate in the room and thermally treat a first airflow between a first intake port and a first delivery port; and
- a second module for extracting a second airflow from the room between a second intake port and a second delivery port and introducing a third airflow from outside into the first and second modules between a third intake port and the first delivery port to deliver the third airflow into the room together with the first airflow; the first and second modules are selectively jointly and disjointly operable; and the second module is selectively detachable from the first module, wherein the first module is fixable to the perimeter wall via brackets and is spaced by the perimeter wall via two lateral guides, which together with the first module form a housing for the second module between the first module and the inner face of the perimeter wall.

In other words, the air-treatment unit for conditioning a room of a building can be operational with the first and second module that interact with each other or with the first module.

In this way, the same air-treatment unit is able to ensure conditioning and air exchange thanks to the first and second modules. In addition, the third airflow coming from the outside before being introduced into the room is thermally treated and mixed with the first airflow in the first module. In this way, it is possible to carry out maintenance operations on the second module or replace the second module keeping the first module operational.

Furthermore, the first module is directly fastened to the perimeter wall, while the second module is supported by the first module and by two lateral guides interposed between the first module and the perimeter wall.

In particular, the first module comprises a water/air heat exchanger; and a first fan arranged in the first module to deliver the first airflow between the first intake port and the first delivery port and through the water/air heat exchanger; and wherein the second module comprises a second fan arranged in the second module to deliver the second airflow between the second intake port and the second delivery port; a third fan arranged in the second module to deliver the third airflow between the third intake port and a third delivery port to transfer the third airflow from the second to the first module.

In this way, the correct circulation of the first, of the second, and of the third airflow, and the independent operation of the first and second modules, and the thermal treatment of the first and third airflows, are ensured and controlled.

In particular, the unit comprises an air-to-air heat exchanger arranged in the second module to exchange heat between the second and third airflows.

In this way, the change in temperature attributable to the air exchange is mitigated.

In particular, the third delivery port places the first and the second module in communication and is arranged near the water/air heat exchanger so as to thermally treat the third airflow immediately introduced into the first module.

In accordance with a particular embodiment, the second module comprises a structural element comprising a main panel, said third delivery port being formed, at least in part, in said main panel in a substantially central position of said main panel.

The structural element also has the load-bearing function of the second module.

In particular, the second intake port is formed in said main panel in proximity to a lower edge of said main panel.

In this way, the first module is fixed to the structural element along the main panel and directly above the second intake port to enable access to the second intake port for maintenance and/or replacement of any filters.

In particular, the second module comprises a first and a second side panel, along which respective openings are formed communicating respectively with the third intake port and the second delivery port, said side panels being adjacent and transverse to the main panel; in particular, said structural element comprising the main panel and the first and second side panels.

This solution is particularly practical in terms of construction.

In particular, the unit comprises an outer wall facing the main panel and a plurality of partitions arranged between the main panel and the outer wall; said partitions being configured and arranged so as to guide the second and third airflows through the air/air heat exchanger and through the second and third fans respectively.

This solution is particularly practical for producing respective channels for the second and third airflows.

According to a particular embodiment of this invention, the first module comprises a front wall, which is a radiant panel so as to offer an additional possibility of conditioning the room, including the absence of the first airflow.

In particular, the front wall configured as a radiant plate comprises a coil for conveying water and two plates arranged in contact with the coil on opposite sides.

In particular, the first fan is arranged between the second intake port and the third delivery port and extends basically the whole width of said unit so as to convey a significant air flow in a laminar flow to touch the water/air heat exchanger.

In particular, the second module comprises a first and second duct, which are configured to be arranged through openings formed in the perimeter wall and arrange the third intake port and the second delivery port respectively in communication with the outside of the building; and a first and a second fitting selectively connectible to the first and second duct and to the second module.

In this way, the second module is easily released from the first and second duct fixed in the perimeter wall.

In particular, the unit comprises a first filter configured to filter the air of the first airflow; a second filter configured to filter the air of the second airflow; and a third filter configured to filter the air of the third airflow, in particular the first filter is accessible at the front of the first module, the second filter is accessible at the front of the second module, and the third filter is arranged in the second module.

In this way, the quality of air in the room is controlled and you avoid contaminating the first and the second module and, in particular, the water/air exchanger and the air/air exchanger.

### BRIEF DESCRIPTION OF THE DRAWINGS

Other characteristics and advantages of this invention will become clear from the following description of the non-limiting embodiment thereof, with reference to the accompanying figures, wherein:
- Figure 1 is a perspective view, with parts removed for clarity, of an air-treatment unit for conditioning a room of a building in accordance with this invention;
- Figure 2 is a cross-section view, with parts removed for clarity, of the unit in Figure 1 according to the section lines II-II;
- Figure 3 is a plan view, with parts removed for clarity, of the unit in Figure 1;
- Figure 4 is an elevated rear view, with parts removed for clarity, of the unit in Figure 1;
- Figure 5 is a perspective view of a structural element of the unit in Figure 1; and
- Figure 6 is a front elevation view, with parts removed for clarity, of a variant of the unit in Figure 1.

### DESCRIPTION OF EMBODIMENTS

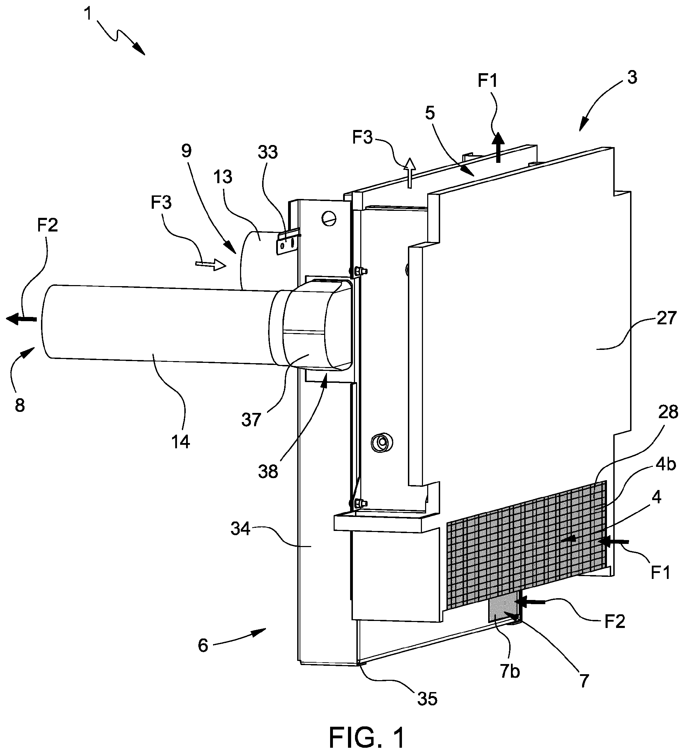

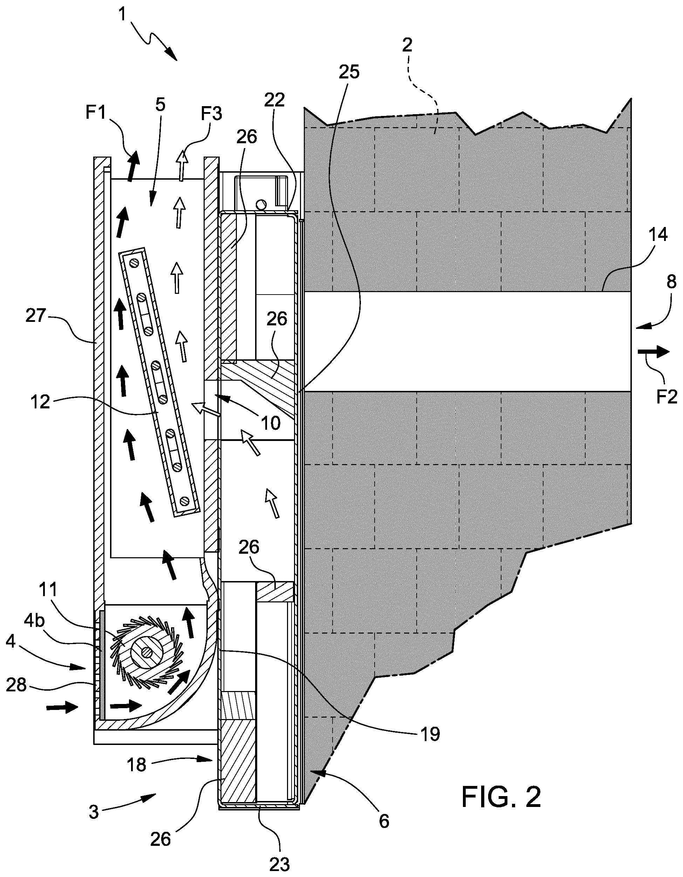

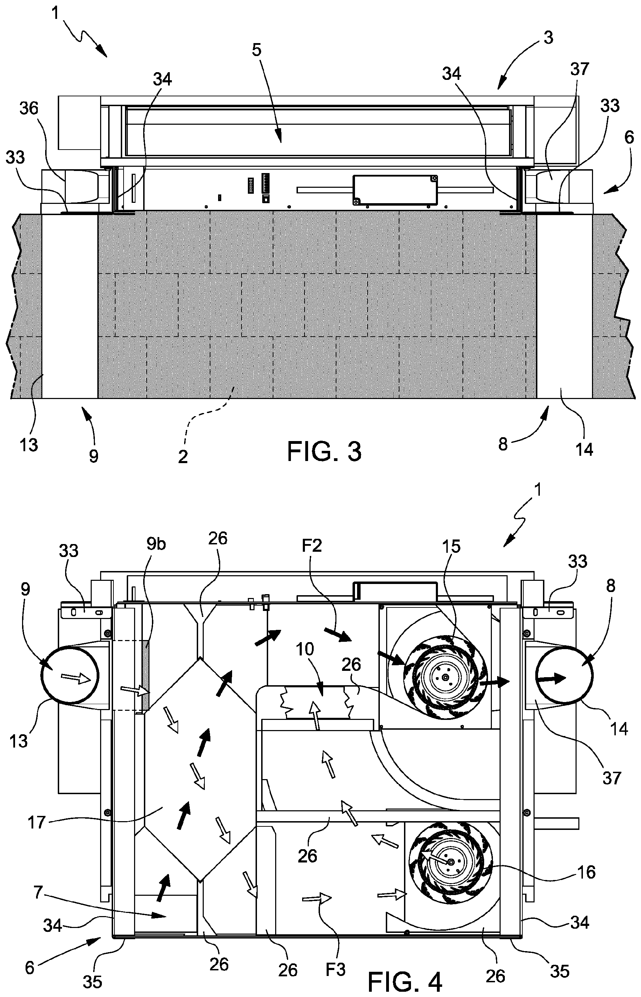

With reference to Figure 1, the reference number 1 denotes, as a whole, an air-treatment unit for conditioning a room of a building. In this case, the unit 1 is configured to be mounted on a perimeter wall 2 of a building and inside a room of the building itself according to what is better illustrated in Figures 2 and 3.

The unit 1 comprises a module 3 comprising an intake port 4 to intake an airflow F1 from the room and a delivery port 5 to deliver the airflow F1 into the room of the building; a module 6 having an intake port 7 to intake an airflow F2 from the room; a delivery port 8 to expel the airflow F2 outside the building; an intake port 9 to intake an airflow F3 from the outside of the building and introduce the airflow F3 into the room of the building through the delivery port 5.

The air-treatment unit 1 has basically the shape of a parallelepiped formed from two modules 3 and 6 next to each other and adjacent and basically having the shape of two parallelepipeds with reduced depth.

With reference to Figure 2, the module 6 comprises a delivery port 10 that places the modules 3 and 6 in communication so as to transfer the airflow F3 from the module 6 to the module 3.

The unit 1 comprises a fan 11 and a water/air heat exchanger 12 arranged inside the module 3 between the intake port 4 and the delivery port 5. The fan 11 feeds an airflow F1 between the intake port 4 and the delivery port 5 through the water/air heat exchanger 12, which is tilted to better intercept the airflow F1 and enable the airflow F1 to touch the exchange elements that, in this case, comprise fins that are not illustrated.

With reference to Figure 3, the module 6 comprises two ducts 13 and 14 that are arranged through the perimeter wall 2 and are configured to arrange, respectively, the intake port 9 and the delivery port 8 in fluidic communication with the outside environment.

With reference to Figure 4, the air-treatment unit 1 comprises a fan 15 arranged in the module 6 to feed an airflow F2 between the intake port 7 and the delivery port 8; and a fan 16 arranged in the module 6 to feed an airflow F3 between the intake port 9 and the delivery port 10; and a heat exchanger 17 arranged in the module 6 to exchange heat between the airflows F2 and F3.

With reference to Figure 2, the delivery port 10 is arranged at the water/air heat exchanger 12 and, at the latter, the airflows F1 and F3 join and mix to leave via the delivery port 5 and be introduced into the room of the building.

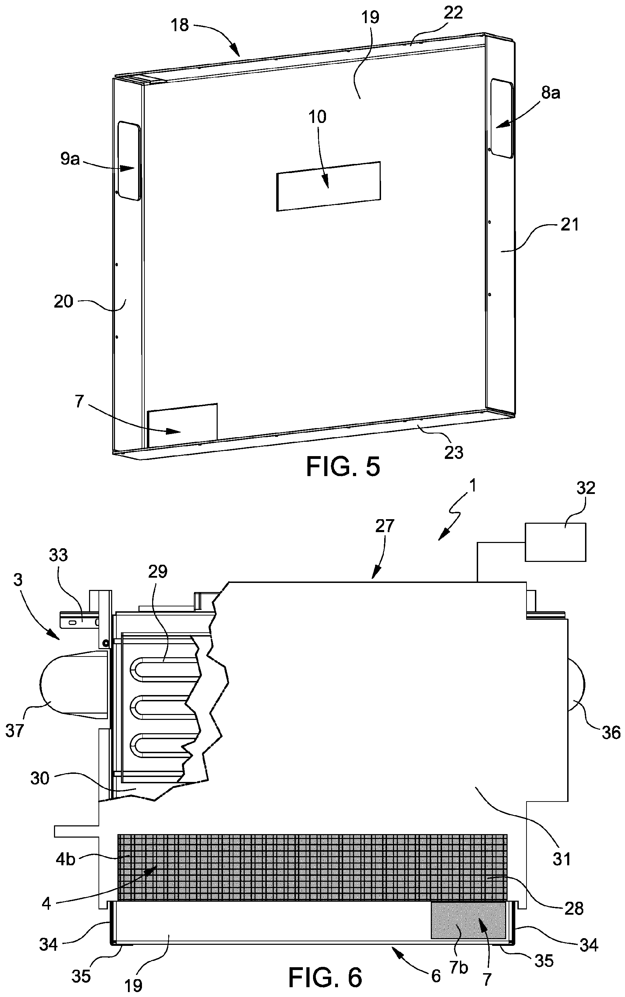

In terms of construction, the module 6 comprises a structural element 18 comprising a main panel 19 according to what is better illustrated in Figure 5. In this case, the delivery port 10 is formed in the main panel 19 in a basically central position in the main panel 19. The intake port 7 is made in the main panel 19 near a lower edge and a side edge of the main panel 19 itself. The structural element 18 comprises two side panels 20 and 21 along which respective openings 9a and 8a are formed, which are configured to be, respectively, arranged in fluid communication with the intake port 9 and the delivery port 8 (Figure 4). In the example illustrated, the side panels 20 and 21 are, in fact, fins folded perpendicular to the main panel 19. In the same way, the structural element 18 comprises an upper panel 22 and a lower panel 23, both in the form of fins folded perpendicular to the main panel 19. In this way, the main panel 19 is surrounded by a continuous containment edge formed from the side panels 20 and 21, by the upper panel 22, and by the lower panel 23.

With reference to Figure 2, the module 6 comprises an outer wall 25 facing the main panel 19 to enclose the structural element 18. The module 6 comprises multiple partitions 26, which are arranged between the main panel 19 and the outer wall 25 and shaped and distributed so as to guide the second and the third airflows F2 and F3 through the air/air heat exchanger 17 and, respectively, through the second and third fan 15 and 16 according to what is better illustrated in Figure 4.

In one embodiment that is not illustrated in the attached figures, the partitions consist of a single piece.

With reference to Figure 6, the module 3 comprises a front wall 27, which has a lower portion defined by a grill 28 arranged at the intake port 4 and opposite the fan 13 (Figure 2). In the intake port 4, a filter 4b is arranged to filter the air entering the first module 3.

In one embodiment of this invention, part of the front wall 27 is configured like a radiant panel and comprises a coil 29 to convey water and two plates 30 and 31 arranged in contact with the coil 29 on opposite sides of the same. Reference number 32 indicates a control unit including a user interface that makes it possible to control, independently, the module 3 and the module 6 and, in particular, the airflow F1 from the airflows F2 and F3.

With reference to Figure 3, the module 3 is fixed to the perimeter wall 2 via brackets 33 and is spaced from the perimeter wall 2 via two lateral guides 34. The lateral guides 34 together with the module 3 form a housing for the module 6 between the module 3 and the inner face of the perimeter wall 2.

In particular, and with reference to Figure 6, each lateral guide 34 comprises a plate 35 arranged at the lower end of the guide 34, on which the module 6 is arranged, resting.

With reference to Figure 3, the unit 1 comprises two fittings 36 and 37 to connect, respectively, the ducts 13 and 14 to the module 6. To enable the assembly of the fittings 36 and 37 on the module 6, the lateral guides 34 have respective openings 38 according to what is better shown in Figure 1.

With reference to Figure 1, the module 3 comprises an interchangeable filter 4b at the intake port 4 along the front face of the unit 1, while the module 6 comprises an interchangeable filter 7b at the intake port 7 along the front face of the unit 1.

With reference to Figure 3, the module 6 comprises an interchangeable filter 9b arranged near the opening 9a and accessible from the upper part of the unit 1.

In use, the air-treatment unit 1 is able to operate, independently, the module 3 to condition the room and the module 6 to exchange the air in the room. The module 3 and the module 6 may operate jointly so that the third airflow is united with the first airflow and is thermally treated in contact with the water/air heat exchanger 14 or in a disconnected way as a function of the conditioning and exchange needs of the air in the room. The module 6 may be removed from the unit 1 by dismantling the fittings 36 and 37 and extracting the module 6 from the lateral guides 34 for maintenance or replacement. In this configuration, the module 3 is able to operate autonomously.

Finally, it is clear that, variations can be made to this invention in relation to the embodiment described without, however, departing from the scope of protection of the attached claims.

## Claims

1. An air-treatment unit for conditioning a room of a building, the unit (1) being configured to be mounted on a perimeter wall (2) of a building and inside a room of the building and comprising:
- a first module (3) configured to recirculate in the room and thermally treat a first airflow (F1) between a first intake port (4) and a first delivery port (5); and
- a second module (6) configured for extracting a second airflow (F2) from the room between a second intake port (7) and a second delivery port (8) and for introducing a third airflow (F3) from outside into the first and second modules (3, 6) between a third intake port (9) and the first delivery port (5) to deliver the third airflow (F3) into the room together with the first airflow (F1), wherein the first and second modules (3, 6) are selectively jointly and disjointly operable; and the second module (6) is selectively detachable from the first module (3), **characterized in that** the first module (3) is fixable to the perimeter wall (2) via brackets (33) and is adapted to be spaced from the perimeter wall (2) via two lateral guides (34), which together with the first module (3) form a housing for the second module (6) between the first module (3) and the inner face of the perimeter wall (2).

2. The unit of claim 1, wherein the first module (3) comprises a water/air heat exchanger (14); and a first fan (13) arranged in the first module (3) and adapted to deliver the first airflow (F1) between the first intake port (4) and the first delivery port (5) and through the water/air heat exchanger (14); and wherein the second module (6) comprises a second fan (15) arranged in the second module (3) adapted to deliver the second airflow (F2) between the second intake port (7) and the second delivery port (8); and a third fan (16) arranged in the second module (3) adapted to deliver the third airflow (F3) between the third intake port (9) and a third delivery port (10) so to transfer the third airflow from the second to the first module (6, 3).

3. The unit as claimed in claim 1 or 2, and comprising an air-to-air heat exchanger (17) arranged in the second module (6) configured to exchange heat between the second and third airflows (F2, F3).

4. The unit as claimed in claim 2 or 3, wherein said third airflow delivery port (10) is arranged at the air/water heat exchanger (14).

5. The unit as claimed in any one of claims 2 to 4, wherein the second module (6) comprises a structural element (18) comprising a main panel (19), said third delivery port (10) being formed, at least in part, in said main panel (19) in a substantially central position of said main panel (19).

6. The unit as claimed in claim 5, wherein said second intake port (7) is formed in said main panel (19) near a lower edge of said main panel (19).

7. The unit as claimed in claim 5 or 6, wherein said second module (6) comprises a first and a second side panel (20, 21), along which are formed respective openings (9a, 8a) communicating respectively with said third intake port (9) and said second delivery port (8), said side panels (20, 21) being adjacent and transverse to said main panel (19); said structural element (18) comprising said main panel (18) and said first and second side panels (20, 21).

8. The unit as claimed in any one of claims 5 to 7, and comprising an outer wall (25) facing the main panel (19) and a plurality of partitions (26) arranged between the main panel (18) and the outer wall (25); said partitions (26) being configured and arranged so as to guide the second and third airflows (F2, F3) through the air/air heat exchanger (17) and through the second and third fans (15, 16) respectively.

9. The unit as claimed in any one of the preceding claims, wherein the first module (3) comprises a front wall (27), which is a radiant panel.

10. The unit as claimed in claim 9, wherein, the front wall (27) comprises a coil (29) for conveying water and two plates (30, 31) arranged in contact with the coil (29) from opposite sides.

11. The unit as claimed in any one of the preceding claims 2-10, wherein the first fan (13) is arranged between the second intake port (7) and the third delivery port (10) and extends substantially across the entire width of said unit (1).

12. The unit as claimed in any one of the preceding claims, and comprising a first and a second duct (11; 12), which are configured to be arranged through openings formed in the perimeter wall (2) and arrange the third intake port (9) and the second delivery port (8), respectively, in communication with the outside of the building; and a first and a second fitting (36, 37) selectively connectible to the first second duct (13, 14) and the second module (6).

13. The unit as claimed in any one of the preceding claims, and comprising a first filter (4b) configured to filter the air of the first airflow (F1); a second filter (7b) configured to filter the air of the second airflow (F2); and a third filter (9b) configured to filter the air of the third airflow (F3), wherein the first filter (4b) is frontally accessible on the first module (3), the second filter (7b)) is frontally accessible on the second module (6), and the third filter (9b) is arranged in the second module (6).

## Patentansprüche

1. Luftbehandlungseinheit zur Klimatisierung eines Raums eines Gebäudes, wobei die Einheit (1) konfiguriert ist, um an einer Umfangswand (2) eines Gebäudes und innerhalb eines Raums des Gebäudes montiert zu werden, und Folgendes umfasst:
- ein erstes Modul (3), das so konfiguriert ist, dass es eine erste Luftströmung (F1) zwischen einer ersten Ansaugöffnung (4) und einer ersten Zuführungsöffnung (5) in den Raum rezirkuliert und thermisch behandelt; und
- ein zweites Modul (6), das zum Absaugen einer zweiten Luftströmung (F2) aus dem Raum zwischen einer zweiten Ansaugöffnung (7) und einer zweiten Zuführungsöffnung (8) und zum Einleiten einer dritten Luftströmung (F3) von außen in das erste und zweite Modul (3, 6) zwischen einer dritten Ansaugöffnung (9) und der ersten Zuführungsöffnung (5) konfiguriert ist, um die dritte Luftströmung (F3) zusammen mit der ersten Luftströmung (F1) in den Raum zuzuführen, wobei das erste und zweite Modul (3, 6) selektiv gemeinsam und disjunkt betreibbar sind; und das zweite Modul (6) selektiv von dem ersten Modul (3) lösbar ist, **dadurch gekennzeichnet, dass** das erste Modul (3) über Halterungen (33) an der Umfangswand (2) fixierbar ist und ausgelegt ist, um von der Umfangswand (2) über zwei seitliche Führungen (34) beabstandet zu sein, die zusammen mit dem ersten Modul (3) ein Gehäuse für das zweite Modul (6) zwischen dem ersten Modul (3) und der Innenfläche der Umfangswand (2) bilden.

2. Einheit nach Anspruch 1, wobei das erste Modul (3) einen Wasser/Luft-Wärmetauscher (14) umfasst; und ein erstes Gebläse (13), das in dem ersten Modul (3) angeordnet ist und dazu ausgelegt ist, die erste Luftströmung (F1) zwischen der ersten Ansaugöffnung (4) und der ersten Zuführungsöffnung (5) und durch den Wasser/Luft-Wärmetauscher (14) zuzuführen; und wobei das zweite Modul (6) ein zweites Gebläse (15), das in dem zweiten Modul (3) angeordnet ist und dazu ausgelegt ist, die zweite Luftströmung (F2) zwischen der zweiten Ansaugöffnung (7) und der zweiten Zuführungsöffnung (8) zuzuführen; und ein drittes Gebläse (16) umfasst, das in dem zweiten Modul (3) angeordnet ist und dazu ausgelegt ist, die dritte Luftströmung (F3) zwischen der dritten Ansaugöffnung (9) und einer dritten Zuführungsöffnung (10) zuzuführen, um die dritte Luftströmung von dem zweiten zu dem ersten Modul (6, 3) zu übertragen.

3. Einheit nach Anspruch 1 oder 2, die einen Luft-Luft-Wärmetauscher (17) umfasst, der in dem zweiten Modul (6) angeordnet und so konfiguriert ist, dass er Wärme zwischen der zweiten und der dritten Luftströmung (F2, F3) austauscht.

4. Einheit nach Anspruch 2 oder 3, wobei die dritte Luftströmung- Zuführungsöffnung (10) an dem Luft/Wasser-Wärmetauscher (14) angeordnet ist.

5. Einheit nach einem der Ansprüche 2 bis 4, wobei das zweite Modul (6) ein Strukturelement (18) umfasst, das eine Hauptplatte (19) umfasst, wobei die dritte Zuführungsöffnung (10) zumindest teilweise in der Hauptplatte (19) in einer im Wesentlichen zentralen Position der Hauptplatte (19) ausgebildet ist.

6. Einheit nach Anspruch 5, wobei die zweite Ansaugöffnung (7) in der Hauptplatte (19) in der Nähe einer unteren Kante der Hauptplatte (19) ausgebildet ist.

7. Einheit nach Anspruch 5 oder 6, wobei das zweite Modul (6) eine erste und eine zweite Seitenplatte (20, 21) umfasst, entlang derer jeweilige Öffnungen (9a, 8a) ausgebildet sind, die jeweils mit der dritten Ansaugöffnung (9) und der zweiten Zuführungsöffnung (8) kommunizieren, wobei die Seitenplatten (20, 21) benachbart zu und quer zu der Hauptplatte (19) sind; wobei das Strukturelement (18) die Hauptplatte (18) und die erste und zweite Seitenplatte (20, 21) umfasst.

8. Einheit nach einem der Ansprüche 5 bis 7 und umfassend eine Außenwand (25), die der Hauptplatte (19) zugewandt ist, und eine Vielzahl von Trennwänden (26), die zwischen der Hauptplatte (18) und der Außenwand (25) angeordnet sind; wobei die Trennwände (26) so konfiguriert und angeordnet sind, dass sie die zweite und dritte Luftströmung (F2, F3) durch den Luft/Luft-Wärmetauscher (17) bzw. durch das zweite und dritte Gebläse (15, 16) leiten.

9. Einheit nach einem der vorhergehenden Ansprüche, wobei das erste Modul (3) eine Vorderwand (27) umfasst, die eine Strahlungsplatte ist.

10. Einheit nach Anspruch 9, wobei die Vorderwand (27) eine Spule (29) zum Fördern von Wasser und zwei Platten (30, 31) umfasst, die von gegenüberliegenden Seiten in Kontakt mit der Spule (29) angeordnet sind.

11. Einheit nach einem der vorhergehenden Ansprüche 2-10, wobei das erste Gebläse (13) zwischen der zweiten Ansaugöffnung (7) und der dritten Zuführungsöffnung (10) angeordnet ist und sich im Wesentlichen über die gesamte Breite der Einheit (1) erstreckt.

12. Einheit nach einem der vorhergehenden Ansprüche und umfassend einen ersten und einen zweiten Kanal (11; 12), die dazu konfiguriert sind, durch Öffnungen angeordnet zu werden, die in der Umfangswand (2) ausgebildet sind, und die dritte Ansaugöffnung (9) bzw. die zweite Zuführungsöffnung (8) in Kommunikation mit der Außenseite des Gebäudes anzuordnen; und ein erstes und ein zweites Anschlussstück (36, 37), die selektiv mit dem ersten zweiten Kanal (13, 14) und dem zweiten Modul (6) verbindbar sind.

13. Einheit nach einem der vorhergehenden Ansprüche und umfassend einen ersten Filter (4b), der konfiguriert ist, um die Luft der ersten Luftströmung (F1) zu filtern; einen zweiten Filter (7b), der konfiguriert ist, um die Luft der zweiten Luftströmung (F2) zu filtern; und einen dritten Filter (9b), der konfiguriert ist, um die Luft der dritten Luftströmung (F3) zu filtern, wobei der erste Filter (4b) an dem ersten Modul (3) frontal zugänglich ist, der zweite Filter (7b) an dem zweiten Modul (6) frontal zugänglich ist und der dritte Filter (9b) in dem zweiten Modul (6) angeordnet ist.

## Revendications

1. Unité de traitement de l'air pour le conditionnement d'une pièce d'un bâtiment, l'unité (1) étant configurée pour être montée sur un mur périphérique (2) d'un bâtiment et à l'intérieur d'une pièce du bâtiment et comprenant :
- un premier module (3) configuré pour faire recirculer dans la pièce et traiter thermiquement un premier flux d'air (F1) entre un premier orifice d'admission (4) et un premier orifice de distribution (5) ; et
- un second module (6) configuré pour extraire un deuxième flux d'air (F2) de la pièce entre un deuxième orifice d'admission (7) et un deuxième orifice de distribution (8) et pour introduire un troisième flux d'air (F3) de l'extérieur dans les premier et second modules (3, 6) entre un troisième orifice d'admission (9) et le premier orifice de distribution (5) pour distribuer le troisième flux d'air (F3) dans la pièce conjointement au premier flux d'air (F1), dans laquelle les premier et second modules (3, 6) sont sélectivement actionnables conjointement et de manière disjointe ; et le second module (6) est sélectivement détachable du premier module (3), **caractérisé en ce que** le premier module (3) peut être fixé à la paroi périphérique (2) par des supports (33) et est adapté pour être espacé de la paroi périphérique (2) par l'intermédiaire de deux guides latéraux (34) qui, avec le premier module (3), forment un logement pour le second module (6) entre le premier module (3) et la face intérieure de la paroi périphérique (2).

2. Unité selon la revendication 1, dans laquelle le premier module (3) comprend un échangeur de chaleur eau/air (14) ; et un premier ventilateur (13) disposé dans le premier module (3) et adapté pour distribuer le premier flux d'air (F1) entre le premier orifice d'admission (4) et le premier orifice de distribution (5) et à travers l'échangeur de chaleur eau/air (14) ; et dans laquelle le second module (6) comprend un deuxième ventilateur (15) disposé dans le second module (3) adapté pour distribuer le deuxième flux d'air (F2) entre le deuxième orifice d'admission (7) et le deuxième orifice de distribution (8) ; et un troisième ventilateur (16) disposé dans le second module (3) adapté pour distribuer le troisième flux d'air (F3) entre le troisième orifice d'admission (9) et un troisième orifice de distribution (10) de manière à transférer le troisième flux d'air du second module au premier module (6, 3).

3. Unité selon la revendication 1 ou 2, et comprenant un échangeur de chaleur air-air (17) disposé dans le second module (6) configuré pour échanger de la chaleur entre les deuxième et troisième flux d'air (F2, F3).

4. Unité selon la revendication 2 ou 3, dans laquelle ledit troisième orifice de distribution de flux d'air (10) est disposé au niveau de l'échangeur de chaleur air/eau (14).

5. Unité selon l'une quelconque des revendications 2 à 4, dans laquelle le second module (6) comprend un élément structurel (18) comprenant un panneau principal (19), ledit troisième orifice de distribution (10) étant formé, au moins en partie, dans ledit panneau principal (19) dans une position sensiblement centrale dudit panneau principal (19).

6. Unité selon la revendication 5, dans laquelle ledit deuxième orifice d'admission (7) est formé dans ledit panneau principal (19) près d'un bord inférieur dudit panneau principal (19).

7. Unité selon la revendication 5 ou 6, dans laquelle ledit second module (6) comprend un premier et un second panneau latéral (20, 21), le long desquels sont formées des ouvertures respectives (9a, 8a) communiquant respectivement avec ledit troisième orifice d'admission (9) et ledit deuxième orifice de distribution (8), lesdits panneaux latéraux (20, 21) étant adjacents et transversaux audit panneau principal (19) ; ledit élément structurel (18) comprenant ledit panneau principal (18) et lesdits premier et second panneaux latéraux (20, 21).

8. Unité selon l'une quelconque des revendications 5 à 7, et comprenant une paroi extérieure (25) faisant face au panneau principal (19) et une pluralité de cloisons (26) disposées entre le panneau principal (18) et la paroi extérieure (25) ; lesdites cloisons (26) étant configurées et disposées de manière à guider les deuxième et troisième flux d'air (F2, F3) à travers l'échangeur de chaleur air/air (17) et à travers les deuxième et troisième ventilateurs (15, 16), respectivement.

9. Unité selon l'une quelconque des revendications précédentes, dans laquelle le premier module (3) comprend une paroi avant (27), qui est un panneau radiant.

10. Unité selon la revendication 9, dans laquelle la paroi avant (27) comprend un serpentin (29) pour le transport de l'eau et deux plaques (30, 31) disposées en contact avec le serpentin (29) à partir de côtés opposés.

11. Unité selon l'une quelconque des revendications précédentes 2 à 10, dans laquelle le premier ventilateur (13) est disposé entre le deuxième orifice d'admission (7) et le troisième orifice de distribution (10) et s'étend sensiblement sur toute la largeur de ladite unité (1).

12. Unité selon l'une quelconque des revendications précédentes, et comprenant un premier et un second conduit (11 ; 12), qui sont configurés pour être disposés à travers des ouvertures formées dans le mur périphérique (2) et qui placent le troisième orifice d'admission (9) et le deuxième orifice de distribution (8), respectivement, en communication avec l'extérieur du bâtiment ; et un premier et un second raccord (36, 37) pouvant être reliés sélectivement au premier second conduit (13, 14) et au second module (6).

13. Unité selon l'une quelconque des revendications précédentes, et comprenant un premier filtre (4b) configuré pour filtrer l'air du premier flux d'air (F1) ; un deuxième filtre (7b) configuré pour filtrer l'air du deuxième flux d'air (F2) ; et un troisième filtre (9b) configuré pour filtrer l'air du troisième flux d'air (F3), dans laquelle le premier filtre (4b) est accessible frontalement sur le premier module (3), le deuxième filtre (7b) est accessible frontalement sur le second module (6), et le troisième filtre (9b) est disposé dans le second module (6).
